# EUROPEAN PATENT SPECIFICATION

(11) **EP 4 455 805 B1**
(45) Date of publication and mention of the grant of the patent: **03.06.2026**
(21) Application number: 22922899.4
(22) Date of filing: 29.01.2022
(51) Int. Cl.: G06F 8/20, G06F 9/54, G06Q 10/06, G06F 8/30, G06F 8/10

(54) **SOFTWARE ARCHITECTURE METHOD AND SOFTWARE ARCHITECTURE**
SOFTWAREARCHITEKTURVERFAHREN UND SOFTWAREARCHITEKTUR
PROCÉDÉ D'ARCHITECTURE LOGICIELLE ET ARCHITECTURE LOGICIELLE

(43) Date of publication of application: 30.10.2024
(73) Proprietor: Siemens Aktiengesellschaft, 80333 München (DE)
(72) Inventor: ZHOU, Zhenhua, Shanghai 200120 (CN); ZHU, Xiaoxun, Beijing 100102 (CN); WENG, Changwei, Nanjing, Jiangsu 211100 (CN)
(74) Representative: Isarpatent
(86) International application number: PCT/CN2022/075075
(87) International publication number: WO 2023/142069

(56) References cited:
- WO-A1-2021/006879
- CN-A- 107 179 750
- CN-A- 108 449 399
- CN-A- 109 933 010
- CN-A- 112 995 001
- CN-A- 113 391 600
- US-A1- 2005 203 771
- DOBAJ JÜRGEN JUERGEN DOBAJ@TUGRAZ AT ET AL: "A Microservice Architecture for the Industrial Internet-Of-Things", PROCEEDINGS OF THE 23RD EUROPEAN CONFERENCE ON PATTERN LANGUAGES OF PROGRAMS, ACMPUB27, NEW YORK, NY, USA, 4 July 2018 (2018-07-04), pages 1 - 15, XP058892164, ISBN: 978-1-4503-9699-8, DOI: 10.1145/3282308.3282320
- SCHIEKOFER RAINER ET AL: "REST based OPC UA for the IIoT", 2018 IEEE 23RD INTERNATIONAL CONFERENCE ON EMERGING TECHNOLOGIES AND FACTORY AUTOMATION (ETFA), IEEE, vol. 1, 4 September 2018 (2018-09-04), pages 274 - 281, XP033426002, DOI: 10.1109/ETFA.2018.8502516

## Description

### TECHNICAL FIELD

The present disclosure mainly relates to the field of computer software, and in particular to a software architecture method and a software architecture.

### BACKGROUND

According to Gartner's definition, an Operational Technology (OT) combines hardware and software, which detects or triggers changes in processes or events occurring in an enterprise by directly monitoring and/or controlling a physical device (referred to as an OT device). The OT uses computers to monitor or change physical states of an Industrial Control System (ICS) and the like. The ICS is a computer-based facility, system, and device configured to remotely monitor and/or control a critical industrial process, so as to achieve physical functions. The term "OT" is used to distinguish the ICS from a traditional Information Technology (IT) system in terms of technical implementation and functionality.

Integration of the IT domain and the OT domain has become increasingly important during digital transformation of enterprises. An urgent issue that needs to be addressed is how enterprises can collect data of the OT domain and control OT domain processes in a way that is easy to understand, rather than IT domain programming.

DOBAJ JÜRGEN JUERGEN DOBAJ@TUGRAZ AT ET INV. AL: "A Microservice Architecture for the Industrial Internet-Of-Things", PROCEEDINGS OF THE 23RD EUROPEAN CONFERENCE ON PATTERN LANGUAGES OF PROGRAMS, ACMPUB27, NEW YORK, NY, USA, 4 July 2018, pages 1-15, DOI: 10.1145/3282308.3282320 discloses a overview of the explored pattern design space that was explored to develop the software architecture and a resulting microservice software architecture for the industrial Internet-of-Things and an initial software structure.

SCHIEKOFER RAINER ET AL: "REST based OPC UA for the IIoT", 2018 IEEE 23RD INTERNATIONAL CONFERENCE ON EMERGING TECHNOLOGIES AND FACTORY AUTOMATION (ETFA), IEEE, vol. 1, 4 September 2018, pages 274-281, DOI: 10.1109/ETFA.2018.8502516 discloses an approach which covers all OPC UA requirements and therefore enables also use cases like server reconfiguration and some insights contributed to the OPC UA specification as part of the V1. 04 release.

CN 109 933 010 A discloses an industrial CPS system and realization method for personalized customization.

WO 2021/006879 A1 discloses a system and method for knowledge-based information modeling using a semantic binding engine, which the semantic binding engine generates a binding configuration based on a legacy domain semantic model extracted from a controller of an autonomous system and a knowledge graph extracted from a knowledge repository of domain knowledge related to the autonomous system.

### SUMMARY

To solve the above technical problems, the present disclosure provides a multilevel, extensible, and stable software architecture.

The present disclosure proposes a software architecture method. The software architecture method includes: establishing a foundation layer, the foundation layer including an Operational Technology (OT) domain low-code development tool, runtime, and a public information model, and an OT domain workflow generated by the OT domain low-code development tool being deployed on the runtime by using the public information model; establishing a domain layer that depends on the foundation layer, the domain layer including a field bus, a domain protocol, and a device tree of an application domain, and the device tree including a connection relationship between devices; and establishing a user case layer that depends on the domain layer, the user case layer including user-defined function modules, and the user-defined function modules being capable of being converted into the field bus, the domain protocol, and the device tree in the domain layer, where data obtained from a data platform is transmitted between the user case layer and the domain layer and transmitted between the domain layer and the foundation layer, by using the public information model. Therefore, the foundation layer, the domain layer, and the user case layer are established separately. The foundation layer only includes a non-service logic part; the domain layer provides a field bus, a domain protocol, and a device tree of a specific application domain; the user case layer is data that is required by a user in the specific application domain in an actual application scenario and data that is generated in the actual application scenario; and some function modules in the user case layer can be alternatively converted into function modules in the domain layer. This method provides a multi-level, extensible, and stable software architecture.

Optionally, the user case layer further includes a third-party interface; and the software architecture method further includes: performing data communication with third-party software through the third-party interface. Therefore, by the arrangement of the third-party interface, the data communication between the third-party interface and the third-party software is performed, thereby improving the expansibility of software.

Optionally, the method includes: the domain layer includes a meta function block and a domain function block; the meta function block includes a system node, a data block, a behavior tree logic, and a language database; and the domain function block includes a resource and a logic node, a standard domain protocol, and a specific domain protocol that correspond to the resource. Therefore, basic functions of the domain layer are achieved through the meta function block, and domain-specific functions of the domain layer are achieved through the domain function block, thereby improving the stability and extensibility of the domain layer.

Optionally, the method further includes: the data platform obtains semantic knowledge from a knowledge graph. Therefore, a retrieval efficiency of the data in the data platform can be improved, and more relevant semantic knowledge can be obtained.

Optionally, the method further includes: the data platform obtains data from a manufacturing operation management system or a manufacturing execution system. Therefore, the data platform can obtain rich manufacturing operation data, making the software architecture built on this basis more stable and reliable.

The present disclosure further proposes a software architecture. The software architecture includes: a foundation layer, the foundation layer including an OT domain low-code development tool, runtime, and a public information model, and an OT domain workflow generated by the OT domain low-code development tool being deployed on the runtime by using the public information model; a domain layer that depends on the foundation layer, the domain layer including a field bus, a domain protocol, and a device tree of an application domain, and the device tree including a connection relationship between devices; and a user case layer that depends on the domain layer, the user case layer including user-defined function modules, and the user-defined function modules being capable of being converted into the field bus, the domain protocol, and the device tree in the domain layer, where data obtained from a data platform is transmitted between the user case layer and the domain layer and transmitted between the domain layer and the foundation layer, by using the public information model.

Optionally, the user case layer further includes a third-party interface; and data communication with third-party software is performed through the third-party interface.

Optionally, the domain layer includes a meta function block and a domain function block; the meta function block includes a system node, a data block, a behavior tree logic, and a language database; and the domain function block includes a resource and a logic node, a standard domain protocol, and a specific domain protocol that correspond to the resource.

Optionally, the data platform obtains semantic knowledge from a knowledge graph.

Optionally, the data platform obtains data from a manufacturing operation management system or a manufacturing execution system.

The present disclosure further proposes an electronic device, including a processor, a memory, and instructions stored in the memory, where the instructions, when executed by the processor, implement the method as described above.

The present disclosure further proposes a computer-readable storage medium, having computer instructions stored thereon, where the computer instructions, when executed, perform the method as described above.

The present disclosure further proposes a computer program product, where the computer program product is tangibly stored on a computer-readable medium and includes computer-readable instructions; and the computer-readable instructions, when executed, cause at least one processor to perform the method as described above.

### BRIEF DESCRIPTION OF THE DRAWINGS

The following accompanying drawings are only intended to give schematic illustrations and explanations of the present disclosure but are not intended to limit a scope of the present disclosure. In the figures:
FIG. 1 is a flowchart of a software architecture method according to an embodiment of the present disclosure;
FIG. 2 is a schematic diagram of a software architecture according to an embodiment of the present disclosure;
FIG. 3 is a schematic diagram of a correlation between all layers of a software architecture according to an embodiment of the present disclosure;
FIG. 4A is a schematic diagram of a domain layer in a software architecture according to an embodiment of the present disclosure;
FIG. 4B is a schematic diagram of a user case layer in a software architecture according to an embodiment of the present disclosure; and
FIG. 5 is a schematic diagram of an electronic device according to an embodiment of the present disclosure.

Descriptions of reference numerals:
100: software architecture method
110, 120, 130: step
20: software architecture
21: foundation layer
211: OT domain low-code development tool
212: runtime
213: public information model
22: domain layer
22a: field bus
22b: domain protocol
22c: device tree
221: meta function block
2211: system node
2212: data block
2213: behavior tree logic
2214: language database
222: domain function block
2221: logic node
2222: resource
2223: standard domain protocol
2224: specific domain protocol
23: user case layer
231: user-defined function module
232: third-party interface
24: data platform
241: manufacturing operation management system/manufacturing execution system
242: data source
25: knowledge graph
20a: cloud service
20b: human resource
20c: Internet of Things edge device
20d: programmable logic controller
20e: robot
20f: script
20g: database
20h: service
20i: enterprise resource planning
20j: product lifecycle management
20k: supply chain management
500: electronic device
510: processor
520: memory

### DETAILED DESCRIPTION

A subject described in this specification is discussed now with reference to exemplary implementations. It should be understood that, discussion of these implementations is merely intended to make a person skilled in the art better understand and implement the subject described in this specification, and is not intended to limit the protection scope of the claims, the applicability, or examples. Changes may be made to the functions and arrangements of the discussed elements without departing from the protection scope of the content of embodiments of this application. Various processes or components may be omitted, replaced, or added in the various examples according to needs. For example, the described method may be performed according to a sequence different from the sequence described herein, and all steps may be added, omitted, or combined. In addition, features described in some examples may alternatively be combined in other examples.

As used in this specification, the term "include" and variants thereof represent open terms, meaning "include but is not limited to". The term "based on" represents "at least partially based on". The terms "one embodiment" and "an embodiment" represent "at least one embodiment". The term "another embodiment" represents "at least one another embodiment". The terms "first", "second", and the like may represent different objects or the same object. Other definitions may be included explicitly or implicitly in the following. Unless otherwise clearly specified, the definition of one term is consistent in the entire specification.

The following describes the embodiments of this application with reference to the accompanying drawings.

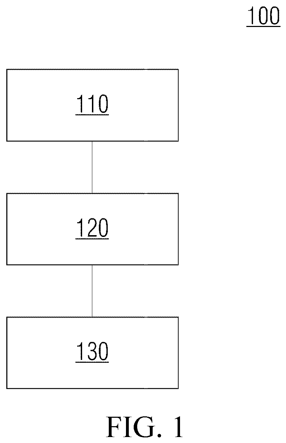

The present disclosure proposes a software architecture method. FIG. 1 is a flowchart of a software architecture method 100 according to an embodiment of the present disclosure. As shown in FIG. 1, the software architecture method 100 includes the following:
Step 110, a foundation layer is established. The foundation layer includes an OT domain low-code development tool, runtime, and a public information model, and an OT domain workflow generated by the OT domain low-code development tool is deployed on the runtime by using the public information model.

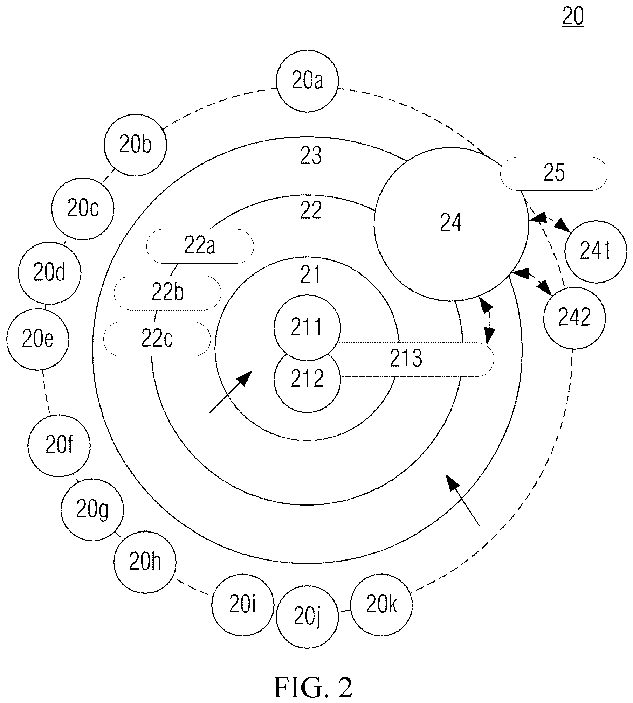

The foundation layer is a core of the entire software architecture, providing an establishing foundation for other layers in the software architecture. It is a lightweight system kernel that only includes a non-service logic part. FIG. 2 is a schematic diagram of a software architecture according to an embodiment of the present disclosure. As shown in FIG. 2, the foundation layer includes an OT domain low-code development tool 211, runtime 212, and a public information model 213. An OT engineer can use the OT domain low-code development tool 211 to establish a workflow on OT device. The OT domain low-code development tool 211 can include a graphical user interface module and an editing processing module. A user (such as the OT engineer) can use the graphical user interface module to establish the workflow from a template and use the editing processing module to edit the workflow. The public information model 213 defines a data model of the workflow. The workflow is deployed on the runtime 212 using the public information model 213 to enable various resources, such as a device, in a work unit to perform operations according to the According to the invention, the work unit has a main controller. At this time, the runtime is located on the main controller of the work unit. Correspondingly, a device resource among the resources may be connected to the main controller, and the main controller controls the device resource connected to the main controller to perform corresponding operations according to the workflow of the runtime. Human resources and other resources among the resources can directly perform corresponding operations according to the workflow of the runtime.

Step 120, a domain layer that depends on the foundation layer is established. The domain layer includes a field bus, a domain protocol, and a device tree of an application domain, and the device tree includes a connection relationship between devices.

The domain layer depends on the foundation layer, namely, the domain layer follows a data rule defined by the foundation layer. The domain layer is managed by the foundation layer and provides knowledge aggregation for a specific application domain, such as the field bus, the domain protocol, and the device tree of the application domain based on the public information model. Connection relationships between devices form the device tree. This embodiment of this application is applicable to the following domains, but not limited to: Industrial Automation, Logistics, Laboratories, Maritime, Smart Grids, Electric Vehicle Infrastructures, Electric Vehicles, Building Automation, Smart Cities, Water Treatment, Garbage Recycling, and Smart Farm. As shown in FIG. 2, the domain layer 22 is established at a periphery of the foundation layer 21. The establishment of the domain layer 22 depends on the foundation layer 21, namely, the domain layer 22 uses the public information model 213. The domain layer 22 provides a field bus 22a, a domain protocol 22b, and a device tree 22c of the application domain. The industrial automation domain is taken as an example. The domain layer 22 provides a Controller Area Network (CAN) bus of the industrial automation domain, a PROFINET protocol of the industrial automation domain, and simulation models for industrial robots, programmable logic controllers, and other devices.

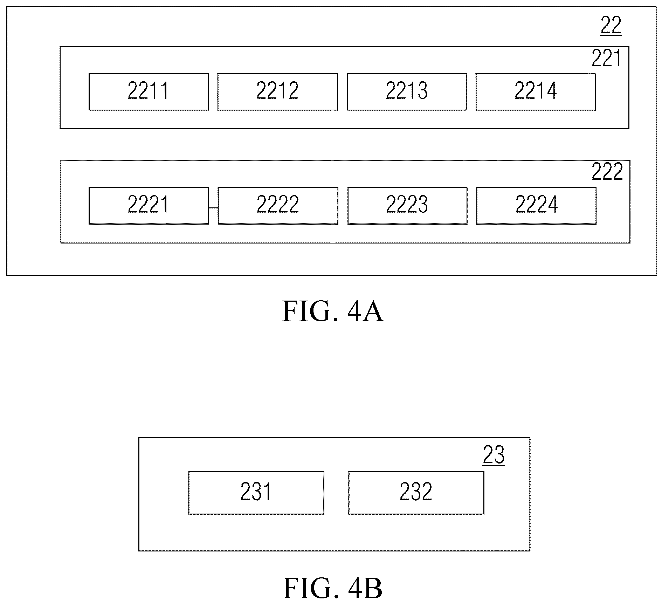

In some embodiments, the method 100 includes the following: the domain layer includes a meta function block and a domain function block; the meta function block includes a system node, a data block, a behavior tree logic, and a language database; and the domain function block includes a resource and a logic node, a standard domain protocol, and a specific domain protocol that correspond to the resource. FIG. 4A is a schematic diagram of a domain layer in a software architecture according to an embodiment of the present disclosure. This figure illustrates the domain layer 22 from the perspective of function modules. As shown in FIG. 4A, the domain layer 22 includes a meta function block 221 and a domain function block 222. The meta function block 221 is a basic function block that can be provided and is independent of the application domain. The meta function block 221 includes a system node 2211 (such as a flow control node, a manual operation node, or a sub-workflow), a database 2212 (such as data from a data platform), a behavior tree logic 2213 (such as a synthesizer and a decorator), and a semantic database (such as a language package). The domain function block 222 is an extended function block that can provide a specific application domain and is related to the application domain. The domain function block 222 includes a resource 2222 (such as a physical node and a human resource), a logic node 2221, a standard domain protocol 2223 (such as OPCUA, MQTT, or BACnet), and a specific domain protocol 2224 (such as ODB++ or IEC61850) that correspond to the resource.

Step 130, a user case layer that depends on the domain layer is established. The user case layer includes user-defined function modules, and the user-defined function modules are capable of being converted into the field bus, the domain protocol, and the device tree in the domain layer.

The user case layer depends on the domain layer, namely, the user case layer follows a data rule defined by the domain layer. The user case layer is data that is required by a user in the specific application domain in an actual application scenario and data that is generated in the actual application scenario, such as a model of a production process in a factory in the industrial automation domain. The user case layer includes user-defined function modules. These user-defined function modules are capable of being converted into the field bus, the domain protocol, and the device tree in the domain layer. As shown in FIG. 2, the user case layer 23 is established at a periphery of the domain layer 22. The establishment of the user case layer 23 depends on the domain layer 22. Namely, the user case layer 23 uses the public information model 213. Function modules of the user case layer 23 in an application scenario can be transformed into a field bus 22a, domain protocol 22b, and device tree 22c in the domain layer 22. In FIG. 2, the field bus 22a, the domain protocol 22b, and the device tree 22c span over the domain layer 22 and the user case layer 23, indicating that the domain layer 22 provides the field bus 22a, the domain protocol 22b, and the device tree 22c for the user case layer 23. In turn, the function modules of the user case layer 23 in the application scenario can also extend the field bus 22a, domain protocol 22b, and device tree 22c in the domain layer 22.

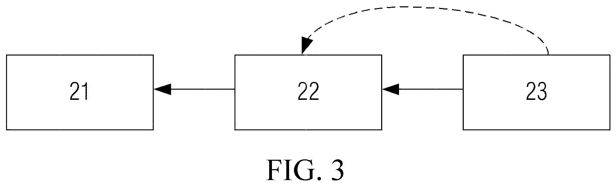

FIG. 3 is a schematic diagram of a correlation between all layers of a software architecture according to an embodiment of the present disclosure. As shown in FIG. 3, the software architecture 20 includes a foundation layer 21, a domain layer 22, and a user case layer 23. The domain layer 22 depends on the foundation layer 21. The user case layer 23 depends on the domain layer 22. Some function modules in the user case layer 23 can be alternatively converted into function modules in the domain layer 22, thereby improving the extensibility of the domain layer 22.

Continuing with reference to FIG. 2, the software architecture further includes a data platform 24. The data platform 24 provides various data required in the software architecture 20. The data platform 24 spans over the domain layer 22 and the user case layer 23. The data obtained from the data platform 24 is transmitted between the user case layer 23 and the domain layer 22 and transmitted between the domain layer 22 and the foundation layer 21, by using the public information model 213.

In some embodiments, the user case layer further includes a third-party interface; and the software architecture method further includes: Data communication with third-party software is performed through the third-party interface. FIG. 4B is a schematic diagram of a user case layer in a software architecture according to an embodiment of the present disclosure. This figure illustrates the user case layer 23 from the perspective of function modules. As shown in FIG. 4B, the user case layer 23 includes a user-defined function module 231. The user-defined function module 231 is defined by a user to achieve customized functions required by the user. The user case layer further includes a third-party interface 232. The third-party interface 232 may perform data communication with the third-party software. As shown in FIG. 2, the third-party software may include a cloud service 20a, a human resource 20b, an Internet of Things edge device 20c, a programmable logic controller 20d, a robot 20e, a script 20f, a database 20g, a service 20h, enterprise resource planning 20i, product lifecycle management 20j, supply chain management 20k, and the like.

In some embodiments, the method 100 further includes the following: The data platform obtains semantic knowledge from a knowledgegraph. As shown in FIG. 2, the data platform 24 obtains semantic knowledge from a knowledge graph25. The semantic knowledge in the knowledge graph 25 is structured, which can improve a retrieval efficiency of the data in the data platform 24 and obtain more relevant semantic knowledge.

In some embodiments, the method 100 further includes the following: The data platform obtains data from a manufacturing operation management system or a manufacturing execution system. As shown in FIG. 2, the data platform 24 obtains data from a manufacturing operation management system or a manufacturing execution system 241. The data platform 24 may alternatively obtain data from other data 242. Therefore, the data platform 24 can obtain rich manufacturing operation data, making the software architecture built on this basis more stable and reliable.

The embodiments of the present disclosure provide the software architecture method. The foundation layer, the domain layer, and the user case layer are established separately. The foundation layer only includes a non-service logic part; the domain layer provides a field bus, a domain protocol, and a device tree of a specific application domain; the user case layer is data that is required by a user in the specific application domain in an actual application scenario and data that is generated in the actual application scenario; and some function modules in the user case layer can be alternatively converted into function modules in the domain layer. This method provides a multi-level, extensible, and stable software architecture.

The present disclosure further proposes a software architecture. FIG. 2 is a schematic diagram of a software architecture 20 according to an embodiment of the present disclosure. The software architecture 20 includes:
a foundation layer 21, the foundation layer including an OT domain low-code development tool 211, runtime 212, and a public information model 213, and an OT domain workflow generated by the OT domain low-code development tool 211 being deployed on the runtime 212 by using the public information model 213;
a domain layer 22 that depends on the foundation layer 21, the domain layer including a field bus 22a, domain protocol 22b, and device tree 22c of an application domain, and the device tree 22c including a connection relationship between devices; and
a user case layer 23 that depends on the domain layer 22, the user case layer 23 including user-defined function modules, and the user-defined function modules being capable of being converted into the field bus, the domain protocol, and the device tree in the domain layer. Data obtained from a data platform is transmitted between the user case layer and the domain layer and transmitted between the domain layer and the foundation layer, by using the public information model.

In some embodiments, the user case layer further includes a third-party interface; and data communication with third-party software is performed through the third-party interface.

In some embodiments, the domain layer includes a meta function block and a domain function block; the meta function block includes a system node, a data block, a behavior tree logic, and a language database; and the domain function block includes a resource and a logic node, a standard domain protocol, and a specific domain protocol that correspond to the resource.

In some embodiments, the data platform obtains semantic knowledge from a knowledge graph.

In some embodiments, the data platform obtains data from a manufacturing operation management system or a manufacturing execution system.

The OT devices in the embodiments of the present disclosure may include, but are not limited to: an Internet of Things (IoT) device, a Programmable Logic Controller (PLC), a Robotics, a Manual Process, an Industrial Personal Computer (IPC), and the like.

Moreover, the concept of "work unit" has been proposed, which makes development closer to a relatively complete and independent control process and operation and more in line with the characteristics of industrial control, thereby improving the integration degree of development and reducing the complexity of development. Here, the work unit can be defined according to an actual industrial scenario, for example: one workstation on a production line corresponds to one work unit, and technological processes of different work units are different.

The IT devices may include, but are not limited to: a Manufacturing Operation Management (MOM) system, a manufacturing execution system (MES), an Enterprise Resource Planning (ERP) system, an Enterprise Service Bus (ERP), a Product Lifecycle Management (PLM) system, and the like.

An application scenario, in the industrial automation domain, of an OT domain development platform provided in the embodiments of this application is as shown below. The low-code development tool generates an OT domain workflow under an operation performed by a user. The OT domain workflow defines operations to be performed by the production line (serving as a work unit). A user can edit the OT domain workflow by dragging an editing function block (as shown in the upper left corner of the figure). For example: firstly, desired data is obtained from a database and server through the data platform (such as: workpiece machining parameters) to control the operation of the entire work unit. The work unit here is a production line. The production line includes a machine, a conveyor belt, a robotic arm, a person, a PLC, an AGB, and the like.

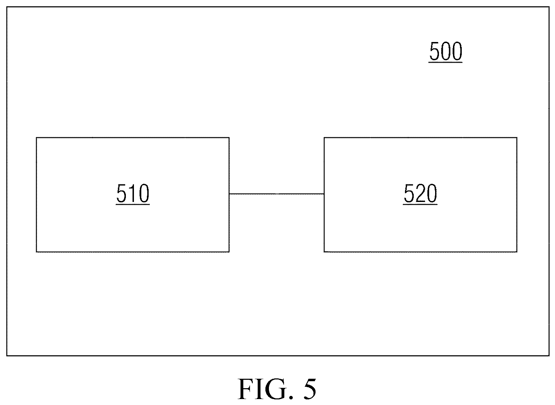

The present disclosure further proposes an electronic device 500. FIG. 5 is a schematic diagram of an electronic device 500 according to an embodiment of the present disclosure. As shown in FIG. 5, the electronic device 500 includes a processor 510 and a memory 520. The memory 520 stores instructions, and the instructions are executed by the processor 510 to implement the method 100 as described above.

The present disclosure further proposes a computer-readable storage medium, having computer instructions stored thereon. The computer instructions, when executed, perform the method 100 as described above.

The present disclosure further proposes a computer program product. The computer program product is tangibly stored on a computer-readable medium and includes computer-readable instructions. The computer-readable instructions, when executed, cause at least one processor to perform the method 100 as described above.

Some aspects of the method and apparatus of the present disclosure may be entirely executed by hardware, may be entirely executed by software (including firmware, resident software, microcodes, and the like), or may be executed by a combination of hardware and software. The foregoing hardware or software may be referred to as "data block", "module", "engine", "unit", "component" or "system". A processor may be one or more application specific integrated circuits (ASIC), digital signal processors (DSP), digital signal processing devices (DSPD), programmable logic devices (PLC), field programmable gate arrays (FPGA), processors, controllers, microcontrollers, microprocessors, or a combination thereof. In addition, various aspects of the present disclosure may be embodied as computer products located in one or more computer-readable media, the product including a computer-readable program code. For example, the computer-readable medium may include, but is not limited to, a magnetic storage device (for example, a hard disk, a floppy disk, a magnetic tape, ...), an optical disk (for example, a compact disc (CD), a digital versatile disc (DVD), ...), a smart card, and a flash memory device (for example, a card, a stick, and a key driver).

The flowchart is used to be configured to describe operations performed by the method according to the embodiments of this application herein. It should be understood that the foregoing operations may not be performed accurately according to the order. On the contrary, the operations may be performed in a reverse order or simultaneously. At the same time, other operations can be added to these processes, or a step of operation or several steps of operations can be removed from these processes.

It should be understood that, although this specification is described according to the various embodiments, each embodiment may not include only one independent technical solution. The description manner of this specification is merely for clarity. This specification should be considered as a whole by a person skilled in the art, and the technical solution in each embodiment may also be properly combined, to form other implementations that can be understood by a person skilled in the art.

## Claims

1. A computer-implemented software architecture method (100) for a specific application domain, wherein the software architecture method (100) comprises:
establishing (S110) a foundation layer, wherein the foundation layer is a system kernel including only a non-service logic part and provides an establishing foundation for other layers in the software architecture , and wherein the foundation layer comprises:
an Operational Technology, OT, domain low-code development tool configured to establish an OT domain workflow on an OT device , a runtime located on a main controller in a work unit referring in particular to a workstation on a production line, and a public information model configured to define a data model of the OT domain workflow,
wherein the OT domain workflow is being deployed on the runtime by using the public information model to enable various resources, in particular OT devices, in the work unit to perform operations according to the OT domain workflow ;
establishing (S120) a domain layer that depends on the foundation layer and uses the public information model , wherein the domain layer is configured to provide knowledge aggregation for the specific application domain, wherein the knowledge aggregation comprises a field bus, a domain protocol, and a device tree of the specific application domain based on the public information model , wherein the device tree comprising a connection relationship between devices; and
establishing (S130) a user case layer that depends on the domain layer, wherein the user case layer comprises data that is required by an external user in the specific application domain in an actual application scenario and is generated in the actual application scenario, and wherein the user case layer comprises user-defined function modules being capable of being converted into the field bus, the domain protocol, and the device tree in the domain layer,
wherein the software architecture comprises a data platform coupled to the public information model and configured to provide data required in the software architecture and wherein data obtained from the data platform is transmitted between the user case layer and the domain layer and transmitted between the domain layer and the foundation layer by using the public information model.

2. The software architecture method according to claim 1, wherein the user case layer further comprises a third-party interface; and the software architecture method (100) further comprises: performing data communication with third-party software through the third-party interface.

3. The software architecture method according to claim 1 or 2, wherein the method (100) comprises: the domain layer comprises a meta function block and a domain function block; the meta function block comprises a system node, a data block, a behavior tree logic, and a language database; and the domain function block comprises a resource and a logic node, a standard domain protocol, and a specific domain protocol that correspond to the resources.

4. The software architecture method according to claim 1, wherein the method (100) further comprises: the data platform obtains semantic knowledge from a knowledge graph.

5. The software architecture method according to claim 1 or 4, wherein the method (100) further comprises: the data platform obtains data from a manufacturing operation management system or a manufacturing execution system.

6. An electronic device, comprising a processor, a memory, and instructions stored in the memory, wherein the instructions are executed by the processor to implement the method according to any one of claims 1 to 5.

7. A computer-readable storage medium, having computer instructions stored thereon, wherein the computer instructions, when executed, perform the method according to any one of claims 1 to 5.

8. A computer program product, wherein the computer program product is tangibly stored on a computer-readable medium and comprises computer-executable instructions; and the computer-executable instructions, when executed, cause at least one processor to perform the method according to any one of claims 1 to 5.

## Patentansprüche

1. Computerimplementiertes Softwarearchitekturverfahren (100) für eine spezifische Anwendungsdomäne, wobei das Softwarearchitekturverfahren (100) Folgendes umfasst:
Einrichten (S110) einer Basisschicht, wobei die Basisschicht ein Systemkernel ist, der nur einen Nicht-Service-Logikteil beinhaltet und eine Einrichtungsgrundlage für andere Schichten in der Softwarearchitektur bereitstellt, und wobei die Basisschicht Folgendes umfasst:
ein Operational-Technology-, OT-, Domänen-Low-Code-Entwicklungswerkzeug, das dazu ausgelegt ist, einen OT-Domänen-Workflow auf einer OT-Vorrichtung einzurichten, eine Laufzeitumgebung, die auf einer Hauptsteuerung in einer Arbeitseinheit angeordnet ist, die sich insbesondere auf eine Arbeitsstation in einer Produktionslinie bezieht, und ein öffentliches Informationsmodell, das dazu ausgelegt ist, ein Datenmodell des OT-Domänen-Workflows zu definieren,
wobei der OT-Domänen-Workflow unter Verwendung des öffentlichen Informationsmodells auf der Laufzeitumgebung bereitgestellt wird, um verschiedene Ressourcen, insbesondere OT-Vorrichtungen, in der Arbeitseinheit zu befähigen, Operationen gemäß dem OT-Domänen-Workflow auszuführen;
Einrichten (S120) einer Domänenschicht, die von der Basisschicht abhängt und das öffentliche Informationsmodell verwendet, wobei die Domänenschicht dazu ausgelegt ist, eine Wissensaggregation für die spezifische Anwendungsdomäne bereitzustellen, wobei die Wissensaggregation einen Feldbus, ein Domänenprotokoll und einen Vorrichtungsbaum der spezifischen Anwendungsdomäne basierend auf dem öffentlichen Informationsmodell umfasst, wobei der Vorrichtungsbaum eine Verbindungsbeziehung zwischen Vorrichtungen umfasst; und
Einrichten (S130) einer Benutzerfallschicht, die von der Domänenschicht abhängt, wobei die Benutzerfallschicht Daten umfasst, die von einem externen Benutzer in der spezifischen Anwendungsdomäne in einem tatsächlichen Anwendungsszenario benötigt werden und in dem tatsächlichen Anwendungsszenario erzeugt werden, und wobei die Benutzerfallschicht benutzerdefinierte Funktionsmodule umfasst, die in den Feldbus, das Domänenprotokoll und den Vorrichtungsbaum in der Domänenschicht umgewandelt werden können,
wobei die Softwarearchitektur eine Datenplattform umfasst, die mit dem öffentlichen Informationsmodell gekoppelt ist und dazu ausgelegt ist, in der Softwarearchitektur benötigte Daten bereitzustellen, und wobei von der Datenplattform erhaltene Daten zwischen der Benutzerfallschicht und der Domänenschicht sowie zwischen der Domänenschicht und der Basisschicht unter Verwendung des öffentlichen Informationsmodells übertragen werden.

2. Softwarearchitekturverfahren nach Anspruch 1, wobei die Benutzerfallschicht ferner eine Schnittstelle eines Drittanbieters umfasst; und das Softwarearchitekturverfahren (100) ferner Folgendes umfasst: Durchführen einer Datenkommunikation mit Software eines Drittanbieters über die Schnittstelle eines Drittanbieters.

3. Softwarearchitekturverfahren nach Anspruch 1 oder 2, wobei das Verfahren (100) umfasst, dass die Domänenschicht einen Metafunktionsblock und einen Domänenfunktionsblock umfasst; der Metafunktionsblock einen Systemknoten, einen Datenblock, eine Verhaltensbaumlogik und eine Sprachdatenbank umfasst; und der Domänenfunktionsblock eine Ressource und einen Logikknoten, ein Standarddomänenprotokoll und ein spezifisches Domänenprotokoll umfasst, die den Ressourcen entsprechen.

4. Softwarearchitekturverfahren nach Anspruch 1, wobei das Verfahren (100) ferner umfasst, dass die Datenplattform semantisches Wissen aus einem Wissensgraphen erhält.

5. Softwarearchitekturverfahren nach Anspruch 1 oder 4, wobei das Verfahren (100) ferner umfasst, dass die Datenplattform Daten von einem Fertigungsbetriebsmanagementsystem oder einem Fertigungsausführungssystem erhält.

6. Elektronische Vorrichtung, die einen Prozessor, einen Speicher und in dem Speicher gespeicherte Anweisungen umfasst, wobei die Anweisungen von dem Prozessor ausgeführt werden, um das Verfahren nach einem der Ansprüche 1 bis 5 zu implementieren.

7. Computerlesbares Speichermedium, das darauf gespeicherte Computeranweisungen aufweist, wobei die Computeranweisungen bei Ausführung das Verfahren nach einem der Ansprüche 1 bis 5 durchführen.

8. Computerprogrammprodukt, wobei das Computerprogrammprodukt greifbar auf einem computerlesbaren Medium gespeichert ist und computerausführbare Anweisungen umfasst; und die computerausführbaren Anweisungen bei Ausführung bewirken, dass mindestens ein Prozessor das Verfahren nach einem der Ansprüche 1 bis 5 durchführt.

## Revendications

1. Procédé (100) d'architecture logicielle mis en œuvre par ordinateur pour un domaine d'application spécifique, le procédé (100) d'architecture logicielle comprenant :
l'établissement (S110) d'une couche de fondation, la couche de fondation étant un noyau de système incluant uniquement une partie logique de non service et fournissant une fondation d'établissement pour d'autres couches dans l'architecture logicielle, et la couche de fondation comprenant :
un outil de développement par programmation schématisée de domaine Operational Technology, OT, configuré pour établir un flux de travail de domaine OT sur un dispositif OT, une exécution située sur un contrôleur principal dans une unité de travail faisant référence en particulier à un poste de travail sur une ligne de production, et un modèle d'information publique configuré pour définir un modèle de données du flux de travail de domaine OT,
dans lequel le flux de travail de domaine OT est déployé sur l'exécution en utilisant le modèle d'information publique pour permettre à diverses ressources, en particulier aux dispositifs OT, dans l'unité de travail de réaliser des opérations selon le flux de travail de domaine OT ;
l'établissement (S120) d'une couche de domaine qui dépend de la couche de fondation et utilise le modèle d'information publique, la couche de domaine étant configurée pour fournir une agrégation de connaissances pour le domaine d'application spécifique, l'agrégation de connaissances comprenant un bus de terrain, un protocole de domaine, et une arborescence de dispositifs du domaine d'application spécifique basée sur le modèle d'information publique, l'arborescence de dispositifs comprenant une relation de connexion entre les dispositifs ; et
l'établissement (S130) d'une couche de cas utilisateur qui dépend de la couche de domaine, la couche de cas utilisateur comprenant des données qui sont requises par un utilisateur externe dans le domaine d'application spécifique dans un scénario d'application réel et sont générées dans le scénario d'application réel, et la couche de cas utilisateur comprenant des modules de fonction définis par l'utilisateur pouvant être convertis dans le bus de terrain, le protocole de domaine, et l'arborescence de dispositifs dans la couche de domaine,
dans lequel l'architecture logicielle comprend une plateforme de données couplée au modèle d'information publique et configurée pour fournir des données requises dans l'architecture logicielle et dans lequel les données obtenues à partir de la plateforme de données sont transmises entre la couche de cas utilisateur et la couche de domaine et transmises entre la couche de domaine et la couche de fondation en utilisant le modèle d'information publique.

2. Procédé d'architecture logicielle selon la revendication 1, dans lequel la couche de cas utilisateur comprend en outre une interface tierce ; et le procédé d'architecture logicielle (100) comprend en outre : la réalisation d'une communication de données avec un logiciel tiers par le biais de l'interface tierce.

3. Procédé d'architecture logicielle selon la revendication 1 ou la revendication 2, le procédé (100) comprenant : la couche de domaine comprend un bloc de méta-fonctions et un bloc de fonctions de domaine ; le bloc de méta-fonctions comprend un nœud système, un bloc de données, une logique d'arbre de comportement, et une base de données linguistique ; et le bloc de fonctions de domaine comprend une ressource et un nœud logique, un protocole de domaine standard, et un protocole de domaine spécifique qui correspondent aux ressources.

4. Procédé d'architecture logicielle selon la revendication 1, le procédé (100) comprenant en outre : la plateforme de données obtient une connaissance sémantique à partir d'un graphe de connaissances.

5. Procédé d'architecture logicielle selon la revendication 1 ou 4, le procédé (100) comprenant en outre : la plateforme de données obtient des données à partir d'un système de gestion d'opération de fabrication ou d'un système d'exécution de fabrication.

6. Dispositif électronique, comprenant un processeur, une mémoire, et des instructions stockées dans la mémoire, les instructions étant exécutées par le processeur pour mettre en œuvre l'une quelconque des revendications 1 à 5.

7. Support de stockage lisible par ordinateur, sur lequel sont stockées des instructions d'ordinateur, les instructions d'ordinateur, lorsqu'elles sont exécutées, réalisant le procédé selon l'une quelconque des revendications 1 à 5.

8. Produit de programme d'ordinateur, le produit de programme d'ordinateur étant stocké de manière tangible sur un support lisible par ordinateur et comprenant des instructions exécutables par ordinateur ; et les instructions exécutables par ordinateur, lorsqu'elles sont exécutées, amenant au moins un processeur à réaliser le procédé selon l'une quelconque des revendications 1 à 5.
